# EUROPEAN PATENT SPECIFICATION

(11) **EP 3 399 262 B1**
(45) Date of publication and mention of the grant of the patent: **17.03.2021**
(21) Application number: 16880449.0
(22) Date of filing: 17.06.2016
(51) Int. Cl.: F25D 29/00, A23L 3/3409

(54) **METHOD FOR CONTROLLING CONCENTRATION OF GAS IN CRISPER DRAWER**
VERFAHREN ZUR STEUERUNG DER KONZENTRATION EINES GASES IN EINER GEMÜSEFRISCHHALTELADE
PROCÉDÉ DE RÉGULATION DE CONCENTRATION DE GAZ DANS UN BAC À LÉGUMES

(30) Priority: 29.12.2015 CN 201511017751
(43) Date of publication of application: 07.11.2018
(73) Proprietor: Qingdao Haier Joint Stock Co., Ltd, Qingdao, Shandong 266101 (CN)
(72) Inventor: LU, Riyong, Qingdao Shandong 266101 (CN); FEI, Bin, Qindao Shandong 266101 (CN); LIU, Jinlin, Qindao Shandong 266101 (CN); LIU, Zhuqing, Qindao Shandong 266101 (CN)
(74) Representative: dompatent von Kreisler Selting Werner - Partnerschaft von Patent- und Rechtsanwälten mbB
(86) International application number: PCT/CN2016/086177
(87) International publication number: WO 2017/113641

(56) References cited:
- WO-A1-2007/020585
- WO-A1-2012/149611
- WO-A1-2014/066952
- CN-A- 102 288 005
- CN-A- 103 575 050
- CN-A- 104 101 158
- CN-A- 105 444 517
- US-A1- 2013 059 047

## Description

### TECHNICAL FIELD

The present invention relates to the technical field of freshness preservation of a refrigerator, and more particularly, to a method for controlling the gas concentration inside a crisper drawer.

### BACKGROUND

With the accelerated pace of life and the development of life quality, people put forward more and more requirements on the freshness preservation durability and the freshness preservation extent of food.

Conventionally, the lifetime of food in a refrigerator is prolonged by regulating the temperature and humidity, but it is impossible to hypnotize food (the metabolic rate is extremely low), especially fresh fruits, just by regulating the temperature and humidity. In this case, it is only possible to slow down the metabolism, which is far below the requirements of modern people on the freshness preservation extent and durability of food.

According to a more advanced technology, a vacuum freshness preservation device or a fast-cooling freshness preservation device are additionally provided in a refrigeration compartment of the refrigerator. By additionally providing such two freshness preservation devices, the freshness preservation effect of the refrigerator will be better than that of conventional refrigerators, but it still cannot achieve the effect of hypnotizing food. WO 2012/149611 A1 and WO 2014/066952 A1 disclose a method for controlling the gas concentration inside a crisper drawer with the features of the preamble of claim 1 and by selectively removing gas, for instance carbon dioxide, through a membrane. CN-A-104 101 158 discloses a similar method in which a nitrogen generator is in the storage chamber.

It is well-known that the replacement of air in a food preservation environment with nitrogen and other inactive gases can achieve the effect of hypnotizing fresh fruits, and the increase of content of oxygen in the food preservation environment can realize the effects of keeping raw shrimp, fish and other living things alive and greatly prolong the freshness preservation lifetime of food. But, neither a device nor a method for controlling internal gas components is provided for the existing refrigerator.

It will cause an increased gas pressure in a storage chamber in the process of charging freshness-preserving gas into the storage chamber. In contrast, gas inside the storage component contracts in coldness following temperature drop in a refrigerating process of the refrigerator, such that a negative pressure occurs due to the gas pressure drop. It is possible to provide a pressure balancing mechanism to balance the gas pressure inside the storage chamber to prevent a too high or too low gas pressure.

### SUMMARY

An object of the present invention is to provide a method for controlling gas concentration inside a crisper drawer.

To achieve the object of the present invention, the invention adopts the following technical solutions: a method for controlling gas concentration inside a crisper drawer comprises the following steps: S1: judging whether a storage chamber for storing food is in a closed state; S2: if yes, acquiring the current concentration of freshness-preserving gas inside the storage chamber and comparing the current concentration with a preset threshold; if not, returning to S1; S3: if the current concentration of the freshness-preserving gas inside the storage chamber is less than the preset threshold, charging freshness-preserving gas into the storage chamber; if the current concentration of the freshness-preserving gas inside the storage chamber is greater than or equal to the preset threshold, stopping charging freshness-preserving gas into the storage chamber.

According to the present invention, a pressure balancing mechanism for a balancing gas pressure inside the storage chamber is connected to the storage chamber; a gas discharge passage and a gas suction passage which are unidirectionally opened and have opposite opening directions are provided in the pressure balancing mechanism; a gas inlet end of the gas discharge passage is communicated with an inside of the storage chamber, and a gas outlet end of the gas discharge passage is communicated with an outside of the storage chamber; a gas outlet end of the gas suction passage is communicated with the inside of the storage chamber, and a gas inlet end of the gas suction passage is communicated with the outside of the storage chamber.

According to the present invention, the pressure balancing mechanism comprises a base and check valves; wherein the base is used for mounting the check valve; the check valve in the gas discharge passage is provided to be opened outwards from the inside of the storage chamber; the check valve in the gas suction passage is provided to be opened inwards from the outside of the storage chamber, wherein the gas inlet end of the gas discharge passage is communicated with an inside of the storage chamber, and the gas outlet end of the gas discharge passage is communicated with an outside of the storage chamber, when gas pressure inside the storage chamber is too high, gas inside the storage chamber is discharged to the outside via the gas discharge passage, such that gas pressure inside the storage chamber drops, the gas outlet end of the gas suction passage is communicated with the inside of the storage chamber, and a gas inlet end of the gas suction passage is communicated with the outside of the storage chamber, when gas pressure inside the storage chamber is too low, external gas enters the storage chamber via the gas suction passage, such that gas pressure inside the storage chamber rises.

As a further improved technical solution of the present invention, the check valve is provided in a vertical direction and comprises a valve body and a valve core bead, wherein an inner wall of the valve body contracts inwards radially to form an annular stop portion, and the valve core bead is laid on the stop portion and is matched with the stop portion to enable opening or closing of the check valve.

As a further improved technical solution of the present invention, the air inlet end of the gas discharge passage and the gas outlet end of the gas suction passage are communicated with the inside of the storage chamber respectively via a first port, and the gas outlet end of the gas discharge passage and the gas inlet end of the gas suction passage are communicated with the outside of the storage chamber respectively via a second port.

To achieve the object of the present invention, the invention adopts the following technical solutions: a method for controlling gas concentration inside a crisper drawer comprises the following steps: S1: judging whether a storage chamber for storing food is switched from an open state to a closed state; S2: if yes, charging freshness-preserving gas into the storage chamber for a gas supply time t, where the gas supply time t=v1(v2^{∗}a), wherein v1 is a volume of the storage chamber, v2 is a flow rate of the charged freshness-preserving gas, and a is the ventilation efficiency; if not, returning to S1.

According to the present invention, a pressure balancing mechanism for controlling gas pressure inside the storage chamber is connected to the storage chamber; a gas discharge passage and a gas suction passage which are unidirectionally opened and have opposite opening directions are provided in the pressure balancing mechanism; a gas inlet end of the gas discharge passage is communicated with an inside of the storage chamber, and a gas outlet end of the gas discharge passage is communicated with an outside of the storage chamber; a gas outlet end of the gas suction passage is communicated with the inside of the storage chamber, and a gas inlet end of the gas suction passage is communicated with the outside of the storage chamber.

According to the present invention, the pressure balancing mechanism comprises a base and check valves; wherein the base is used for mounting the check valve; the check valve in the gas discharge passage is provided to be opened outwards from the inside of the storage chamber; the check valve in the gas suction passage is provided to be opened inwards from the outside of the storage chamber, wherein the gas inlet end of the gas discharge passage is communicated with an inside of the storage chamber, and the gas outlet end of the gas discharge passage is communicated with an outside of the storage chamber, when gas pressure inside the storage chamber is too high, gas inside the storage chamber is discharged to the outside via the gas discharge passage, such that gas pressure inside the storage chamber drops, the gas outlet end of the gas suction passage is communicated with the inside of the storage chamber, and a gas inlet end of the gas suction passage is communicated with the outside of the storage chamber, when gas pressure inside the storage chamber is too low, external gas enters the storage chamber via the gas suction passage, such that gas pressure inside the storage chamber rises.

As a further improved technical solution of the present invention, the check valve is provided in a vertical direction and comprises a valve body and a valve core bead, wherein an inner wall of the valve body contracts inwards radially to form an annular stop portion, and the valve core bead is laid on the stop portion and is matched with the stop portion to enable opening or closing of the check valve.

As a further improved technical solution of the present invention, the air inlet end of the gas discharge passage and the gas outlet end of the gas suction passage are communicated with the inside of the storage chamber respectively via a first port, and the gas outlet end of the gas discharge passage and the gas inlet end of the gas suction passage are communicated with the outside of the storage chamber respectively via a second port.

Compared with the prior art, the present invention has the following technical effects: according to the method disclosed by the present invention, the freshness-preserving gas is selectively input into the storage chamber, so that the concentration of the freshness-preserving gas inside the storage chamber can be controlled to be higher than target concentration. As such, the freshness preservation lifetime of food is significantly prolonged; and meanwhile, economical efficiency of the freshness-preserving gas is also improved.

### BRIEF DESCRIPTION OF THE DRAWINGS

Fig. 1 is a schematically structural view of the crisper drawer in a closed state according to Embodiment 1;
Fig. 2 is a schematically structural view of the crisper drawer in an open state according to Embodiment 1;
Fig. 3 is a schematically exploded structural view of the crisper drawer according to Embodiment 1;
Fig. 4 is a schematic view of a flowing direction of gas when the gas supply mechanism is supplied with the gas;
Fig. 5 is a schematically sectional structural view of the pressure balancing mechanism;
Fig. 6 is a schematically sectional structural view of the check valve;
Fig. 7 is schematically structural view in which the pressure balancing mechanism is connected with the ventilation pipeline;
Fig. 8 is a schematically exploded structural view of the pressure balancing mechanism, the ventilation pipeline and the door body;
Fig. 9 is a schematic view of a flowing direction of gas in the gas discharge passage;
Fig. 10 is a schematic view of a flowing direction of gas in the gas suction passage;
Fig. 11 is a control flowchart of a method for controlling gas concentration inside the crisper drawer;
Fig. 12 is a control flowchart of a method for controlling gas concentration inside the crisper drawer.

### DETAILED DESCRIPTION

The present invention, which is defined by the claims, will now be described in detail with reference to specific embodiments as illustrated in the accompanying drawings.

The same or similar structures in the embodiments employ the same reference numerals.

### Embodiment 1

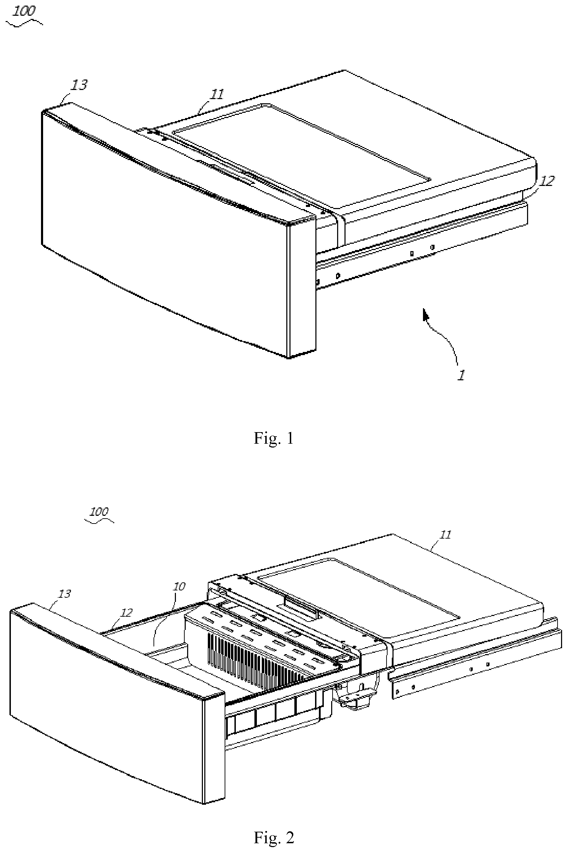

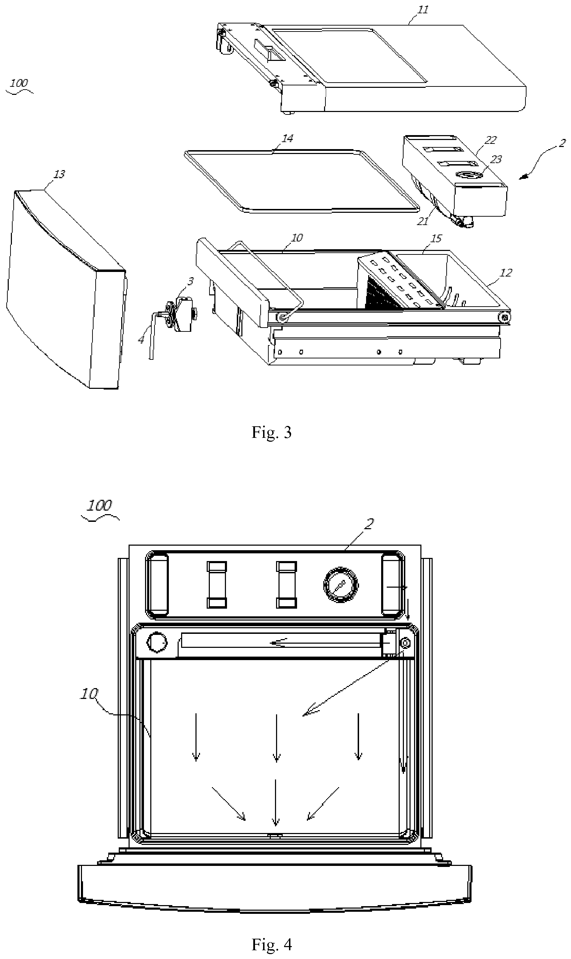

Referring to Figs. 1 to 4, the present invention provides a crisper drawer 100, comprising a drawer main body 1, a gas supply mechanism 2 and a pressure balancing mechanism 3. The drawer main body 1 is provided with a storage chamber 10 therein for storing food, the storage chamber 10 being of an openable sealed structure.

In particular, the drawer main body 1 comprises a cover body 11, a box body 12 and a door body 13, wherein the box body 12 can be moved with respect to the cover body 11 in a depth direction of a refrigerator to open or close the storage chamber 10, and the door body 13 is provided at the outer side of the refrigerator in the depth direction and used for heat preservation. A sealing structure comprises a sealing ring 14 provided on the box body 12 and a press fit mechanism (not shown in drawings) provided on the cover body 11. When the storage chamber 10 is closed, the press fit mechanism presses the sealing ring 14 to ensure sealing of the storage chamber 10.

In this embodiment, the drawer main body 1 is provided with a gas supply compartment 15 therein for placement of the gas supply mechanism 2, and the air supply compartment 15 is communicated with the storage chamber 10 via a gas passage. Of course, in other embodiment of the present invention, in order to ensure the maximized space of the storage chamber 10, there may be no gas supply compartment 15 provided inside the drawer main body 1, while the gas supply mechanism 2 is provided outside the drawer main body 1 and communicated with the storage chamber 10 via a pipeline.

The gas supply mechanism 2 is used for supplying freshness-preserving gas to the storage chamber 10, wherein the freshness-preserving gas may be a gas, such as nitrogen for hypnotizing fresh fruits, or oxygen for keeping raw shrimp, fish and other living things alive, which can be selected by a user according to his/her demands.

In particular, the gas supply mechanism 2 comprises a gas cylinder 21 for storing the freshness-preserving gas. The gas cylinder 21 is fixed to a cover plate 22. The freshness-preserving gas can be charged into the storage chamber 10 via the gas passage between the gas supply compartment 15 and the storage chamber 10. In order to eliminate potential safety hazard of too-high pressure inside the gas cylinder 21, a pressure relief valve 23 is also connected to the gas cylinder 21.

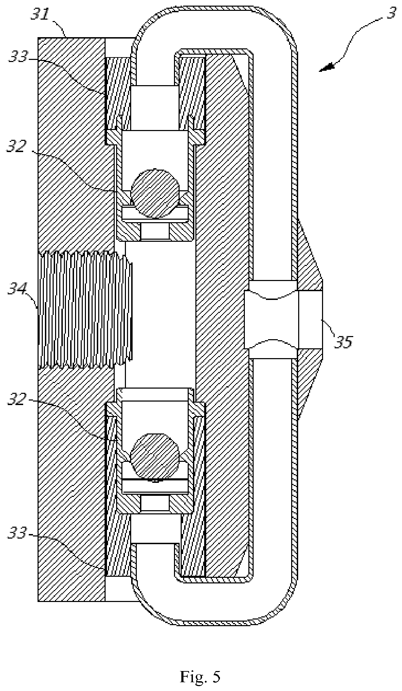

It will be possible to cause increased gas pressure inside the storage chamber 10 in the process of charging the freshness-preserving gas into the storage chamber 10. In contrast, gas inside the storage component 10 contracts in coldness following temperature drop in a refrigerating process of a refrigerator, such that negative pressure occurs due to gas pressure drop (see Fig. 5). Therefore, the present invention provides a pressure balancing mechanism 3 to balance the gas pressure inside the storage chamber 10 to prevent a too high or too low gas pressure.

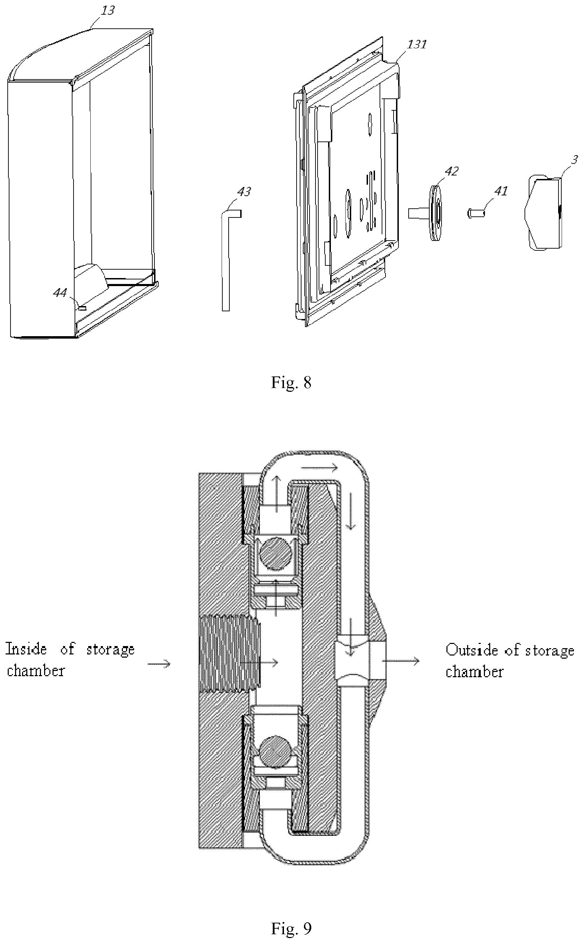

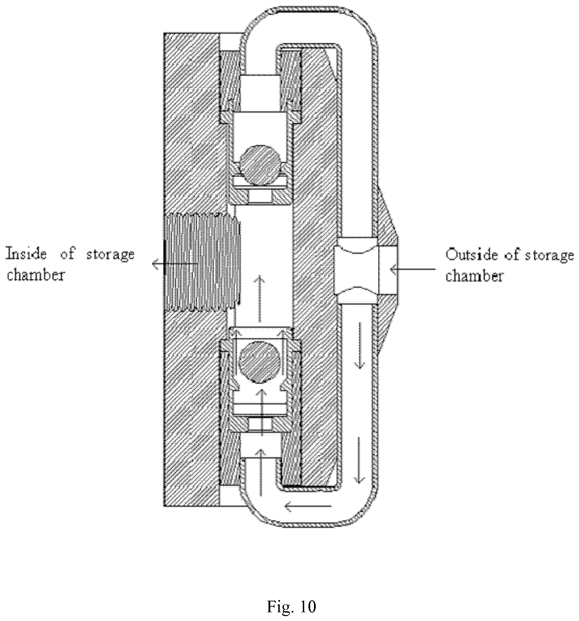

A gas discharge passage (see Fig. 9) and a gas suction passage (see Fig. 10) which are unidirectionally opened and have opposite opening directions are provided in the pressure balancing mechanism 3.

A gas inlet end of the gas discharge passage is communicated with an inside of the storage chamber 10, and a gas outlet end of the gas discharge passage is communicated with an outside of the storage chamber 10. When gas pressure inside the storage chamber 10 is too high, gas inside the storage chamber 10 is discharged to the outside via the gas discharge passage, such that gas pressure inside the storage chamber 10 drops.

A gas outlet end of the gas suction passage is communicated with the inside of the storage chamber 10, and a gas inlet end of the gas suction passage is communicated with the outside of the storage chamber 10. When gas pressure inside the storage chamber 10 is too low, external gas enters the storage chamber 10 via the gas suction passage, such that gas pressure inside the storage chamber 10 rises.

In particular, the pressure balancing mechanism 3 comprises a base 31 and check valves 32, wherein the base 31 is used for mounting the check valves 32. The check valve 32 in the gas discharge passage is provided to be opened outwards from the inside of the storage chamber 10. The check valve 32 in the gas suction passage is provided to be opened inwards from the outside of the storage chamber 10.

In order to ensure gas tightness of the pressure balancing mechanism 3, a mounting gap between the check valve 32 and the base 31 is charged with a sealing plug 33.

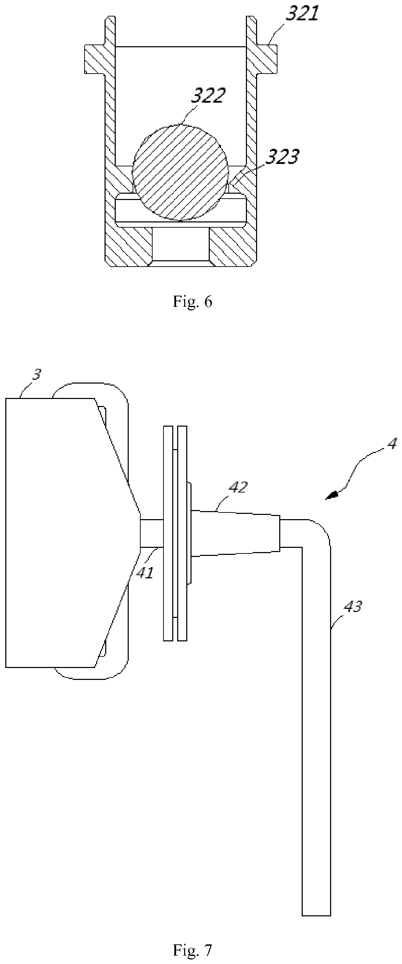

Referring to Fig. 6, the check valve 32 is provided in a vertical direction and comprises a valve body 321 and a valve core bead 322, wherein an inner wall of the valve body 321 contracts inwards radially to form an annular stop portion 323, and the valve core bead 322 is laid on the stop portion and is matched with the stop portion to enable opening or closing of the check valve 32.

When the gas pressure faces the stop portion from the valve core bead 322, the valve core bead 322 deadly seals a gas pore in the middle of the stop portion 323 by means of the gas pressure and self weight thereof, such that the check valve 32 is closed. When the gas pressure faces the valve core bead 322 from the stop portion and is enough to offset the self weight of the valve core bead 322, the valve core bead 322 is separated from the stop portion 323, such that the check valve 32 is opened, and gas can pass through the gas pore in the middle of the stop portion.

Further, going on referring to Fig. 5, in order to simplify a gas passage structure, the air inlet end of the gas discharge passage and the gas outlet end of the gas suction passage are communicated with the inside of the storage chamber 10 respectively via a first port 34, and the gas outlet end of the gas discharge passage and the gas inlet end of the gas suction passage are communicated with an inside of a refrigerator compartment outside the storage chamber 10 respectively via a second port 35.

When the freshness-preserving gas is a hypnotic gas such as nitrogen, the hypnotic gas is directly discharged into the refrigerator compartment via the second port 35 and does not adversely affect the food stored in the refrigerator compartment. However, when the freshness-preserving gas is oxygen, it is possible to accelerate the rot of food if the oxygen is directly discharged to the refrigerator compartment.

Further, referring to Figs. 7 to 8, the second port 35 is communicated with a ventilation pipeline 4. The ventilation pipeline 4 sequentially comprises a gas connecting pipe 41, a gas connecting nozzle 42 and a ventilation pipe 43, wherein the gas connecting nozzle 42 is clamped on a door lining 131 of a door body 13, the gas connecting pipe 41 is used for connecting the gas connecting nozzle 42 with the second port 35, and the ventilation pipe 43 is used for connecting the gas connecting nozzle 42 with the outside of the refrigerator. Excessive freshness-preserving gas is guided to the outside of the refrigerator via the ventilation pipeline 4 and then discharged, such that the adverse affects on other foods in the refrigerator compartment can be avoided.

In particular, the gas exchange pipe 43 is communicated with the outside of the refrigerator via a ventilation hole 44 in the bottom of the door body 13, thereby achieving a function of discharging gas to the outside of the refrigerator while keeping the integrally attractive appearance of the refrigerator. Because the density of most of freshness-preserving gases, such as oxygen is greater than that of air, the height of the ventilation hole 44 is set to be lower than that of the second port 35, such that gas in the storage chamber can be discharged more smoothly.

Referring to Figs. 9 to 10, arrows in Fig. 9 indicate a flowing direction of gas in the gas discharge passage, and arrows in Fig. 10 indicate a flowing direction of gas in the gas suction passage. When gas pressure inside the storage chamber is higher than an external gas pressure and the gas pressure is greater than the self weight of the valve core bead 322, the valve core bead 322 of the check valve 32 (the check valve 32 at the upper part) in the gas discharge passage is lift by gas, gas flow having relatively high pressure flows away from the peripheral gap of the lift valve core bead 322 to relieve pressure. Meanwhile, due to the weight and the action of positive pressure inside an area, the valve core bead 322 of the check valve 32 (the check valve 32 at the lower part) in the gas suction passage acts such that the discharged gas cannot open the check valve 32 in the gas suction passage even if it flows to the gas suction passage. In the same way, when the gas pressure inside the storage chamber is lower than the external gas pressure and the gas pressure is greater than the self weight of the valve core bead 322, the valve core bead 322 of the check valve 32 (the check valve 32 at the lower part) in the gas suction passage is lift by gas, gas flow having relatively high pressure flows away from the peripheral gap of the lift valve core bead 322 to relieve pressure, and meanwhile, due to the weight and the action of positive pressure inside an area, the valve core bead 322 of the check valve 32 (the check valve 32 at the upper part) in the gas discharge passage acts such that the sucked gas cannot open the check valve 32 in the gas discharge passage even if it is discharged to the gas suction passage.

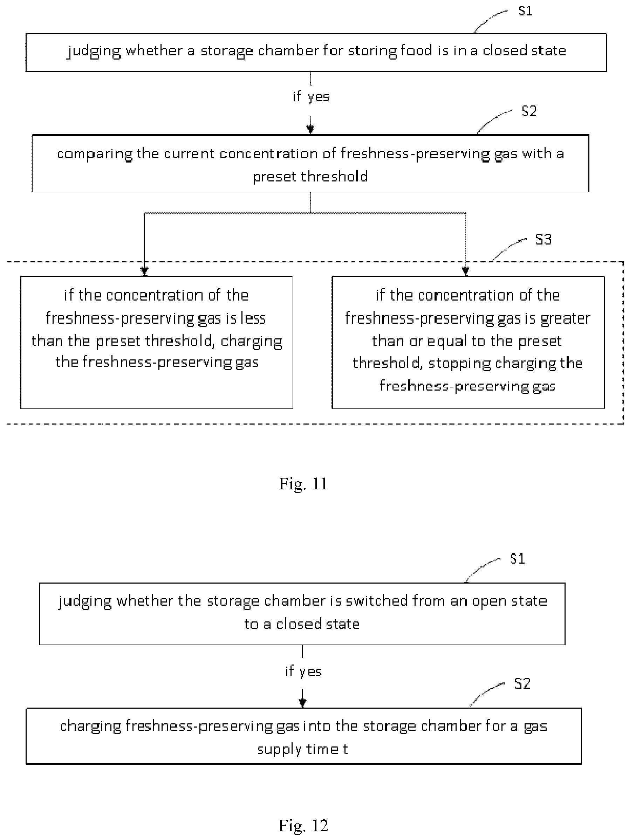

Referring to Fig. 11, the present invention discloses a method for controlling gas concentration inside a crisper drawer, comprising the following steps: S1: judging whether a storage chamber for storing food is in a closed state; S2: if yes, acquiring the current concentration of freshness-preserving gas inside the storage chamber and comparing the current concentration with a preset threshold; if not, returning to S1; S3: if the current concentration of the freshness-preserving gas inside the storage chamber is less than the preset threshold, charging freshness-preserving gas into the storage chamber; if the current concentration of the freshness-preserving gas inside the storage chamber is greater than or equal to the preset threshold, stopping charging freshness-preserving gas into the storage chamber.

In S1, the current state of the storage chamber is judged according to an electric signal generated by a microswitch (not shown in drawings) provided on a box body.

In S2, the current concentration of the freshness-preserving gas inside the storage chamber is acquired by a gas concentration sensor provided in the storage chamber.

Referring to Fig. 12, the present invention further discloses another method for controlling gas concentration inside a crisper drawer, comprising the following steps: S1: judging whether a storage chamber for storing food is switched from an open state to a closed state; S2: if yes, charging freshness-preserving gas into the storage chamber for a gas supply time t, where the gas supply time t=v1(v2^{∗}a), wherein v1 is a volume of the storage chamber, v2 is a flow rate of the charged freshness-preserving gas, and a is the ventilation efficiency; if not, returning to S1.

In S1, the state switching of the storage chamber is judged according to an electric signal generated by a microswitch (not shown in drawings) provided on a box body.

In S2, it is assumed that the volume of the storage chamber is v11, the flow rate of the freshness-preserving gas charged to the gas supply mechanism is v21/min, and the ideal ventilation efficiency is 100%, and then t=v1/v2. However, in fact, owing to the difference in size of the storage chamber, and in sizes and locations of a gas inlet and a gas outlet of the storage chamber, as well as in target concentration of the freshness-preserving gas, the ventilation efficiency of the freshness-preserving gas is also different. The ventilation efficiency a can be obtained by CAE or model test, and then the gas supply time t=v1/(v2^{∗}a). The gas supply mechanism supplies gas to the storage chamber during the timing period of the gas supply time until the gas supply time expires.

According to the method disclosed by the present invention, the freshness-preserving gas is selectively input into the storage chamber, so that the concentration of the freshness-preserving gas inside the storage chamber can be controlled to be higher than target concentration. As such, the freshness preservation lifetime of food is significantly prolonged; and meanwhile, economical efficiency of the freshness-preserving gas is also improved.

## Claims

1. A method for controlling a gas concentration inside a crisper drawer (100), comprising the following steps:
S1: judging whether a storage chamber (10) for storing food is in a closed state;
S2: if yes, acquiring the current concentration of freshness-preserving gas inside the storage chamber (10) and comparing the current concentration with a preset threshold;
if not, returning to S1;
**characterized by** the step
S3: if the current concentration of the freshness-preserving gas inside the storage chamber (10) is less than the preset threshold, charging freshness-preserving gas into the storage chamber (10);
if the current concentration of the freshness-preserving gas inside the storage chamber (10) is greater than or equal to the preset threshold, stopping charging freshness-preserving gas into the storage chamber (10) wherein
a pressure balancing mechanism (2) for a balancing gas pressure inside the storage chamber (10) is connected to the storage chamber (10);
a gas discharge passage and a gas suction passage which are unidirectionally opened and have opposite opening directions are provided in the pressure balance mechanism (2);
a gas inlet end of the gas discharge passage is communicated with an inside of the storage chamber (10), and a gas outlet end of the gas discharge passage is communicated with an outside of the storage chamber (10);
a gas outlet end of the gas suction passage is communicated with the inside of the storage chamber (10), and a gas inlet end of the gas suction passage is communicated with the outside of the storage chamber, wherein
the pressure balancing mechanism (2) comprises a base (31) and check valves (32); wherein
the base (31) is used for mounting the check valve (32);
the check valve (32) in the gas discharge passage is provided to be opened outwards from the inside of the storage chamber (10);
the check valve (32) in the gas suction passage is provided to be opened inwards from the outside of the storage chamber (10), and
wherein the gas inlet end of the gas discharge passage is communicated with an inside of the storage chamber (10), and the gas outlet end of the gas discharge passage is communicated with an outside of the storage chamber (10), when gas pressure inside the storage chamber is too high, gas inside the storage chamber (10) is discharged to the outside via the gas discharge passage, such that gas pressure inside the storage chamber (10) drops, the gas outlet end of the gas suction passage is communicated with the inside of the storage chamber (10), and a gas inlet end of the gas suction passage is communicated with the outside of the storage chamber (10), when gas pressure inside the storage chamber (10) is too low, external gas enters the storage chamber (10) via the gas suction passage, such that gas pressure inside the storage chamber (10) rises.

2. The method for controlling the gas concentration inside the crisper drawer according to claim 1, wherein
the check valve (32) is provided in a vertical direction and comprises a valve body (321) and a valve core bead (322), wherein an inner wall of the valve body (321) contracts inwards radially to form an annular stop portion (323), and the valve core bead (322) is laid on the stop portion (323) and is matched with the stop portion (323) to enable opening or closing of the check valve (32).

3. The method for controlling the gas concentration inside the crisper drawer according to claim 1, wherein
the air inlet end of the gas discharge passage and the gas outlet end of the gas suction passage are communicated with the inside of the storage chamber (10) respectively via a first port (34), and the gas outlet end of the gas discharge passage and the gas inlet end of the gas suction passage are communicated with the outside of the storage chamber (10) respectively via a second port (35).

4. A method for controlling a gas concentration inside a crisper drawer (100), comprising the following steps:
S1: judging whether a storage chamber (10) for storing food is switched from an open state to a closed state;
**characterized by** the step
S2: if yes, charging freshness-preserving gas into the storage chamber (10) for a gas supply time t, where the gas supply time t=v1(v2^{∗}a), wherein v1 is a volume of the storage chamber, v2 is a flow rate of the charged freshness-preserving gas, and a is the ventilation efficiency;
if not, returning to S1, wherein
a pressure balancing mechanism (2) for balancing a gas pressure inside the storage chamber (10) is connected to the storage chamber (10);
a gas discharge passage and a gas suction passage which are unidirectionally opened and have opposite opening directions are provided in the pressure balancing mechanism (2),
a gas inlet end of the gas discharge passage is communicated with an inside of the storage chamber (10), and a gas outlet end of the gas discharge passage is communicated with an outside of the storage chamber (10);
a gas outlet end of the gas suction passage is communicated with the inside of the storage chamber (10), and the gas inlet end of the gas suction passage is communicated with the outside of the storage chamber (10), wherein
the pressure balancing mechanism (2) comprises a base (31) and check valves (32) wherein
the base (31) is used for mounting the check valve (32);
the check valve (32) in the gas discharge passage is provided to be opened outwards from the inside of the storage chamber (10);
the check valve (32) in the gas suction passage is provided to be opened inwards from the outside of the storage chamber (10) and wherein the gas inlet end of the gas discharge passage is communicated with an inside of the storage chamber (10), and the gas outlet end of the gas discharge passage is communicated with an outside of the storage chamber (10), when gas pressure inside the storage chamber (10) is too high, gas inside the storage chamber (10) is discharged to the outside via the gas discharge passage, such that gas pressure inside the storage chamber (10) drops, the gas outlet end of the gas suction passage is communicated with the inside of the storage chamber (10), and a gas inlet end of the gas suction passage is communicated with the outside of the storage chamber (10), when gas pressure inside the storage chamber (10) is too low, external gas enters the storage chamber (10) via the gas suction passage, such that gas pressure inside the storage chamber (10) rises.

5. The method for controlling the gas concentration inside the crisper drawer according to claim 4, wherein
the check valve (32) is provided in a vertical direction and comprises a valve body (321) and a valve core bead (322), wherein an inner wall of the valve body (321) contracts inwards radially to form an annular stop portion (323), and the valve core bead (322) is laid on the stop portion (323) and is matched with the stop portion (323) to enable opening or closing of the check valve (32).

6. The method for controlling the gas concentration inside the crisper drawer according to claim 4, wherein
the air inlet end of the gas discharge passage and the gas outlet end of the gas suction passage are communicated with the inside of the storage chamber (10) respectively via a first port (34), and the gas outlet end of the gas discharge passage and the gas inlet end of the gas suction passage are communicated with the outside of the storage chamber (10) respectively via a second port (35).

## Patentansprüche

1. Verfahren zum Regeln einer Gaskonzentration in einer Gemüsefachschublade (100) mit den folgenden Schritten:
S1: Feststellen, ob eine Lagerkammer (10) zum Lagern von Nahrungsmitteln sich in einem geschlossenen Zustand befindet;
S2: wenn ja, Erfassen der aktuellen Konzentration von Frischhaltegas in der Lagerkammer (10) und Vergleichen der aktuellen Konzentration mit einem voreingestellten Schwellenwert;
wenn nein, Rückkehr zu S1;
**gekennzeichnet durch** den Schritt:
S3: wenn die aktuelle Konzentration des Frischhaltegas in der Lagerkammer (10) geringer ist als der voreingestellte Schwellenwert, Zuführen von Frischhaltegas in die Lagerkammer (10);
wenn die aktuelle Konzentration des Frischhaltegases in der Lagerkammer (10) höher oder gleich dem voreingestellten Schwellenwert ist, Stoppen der Zufuhr von Frischhaltegas in die Lagerkammer (10), wobei
ein Druckausgleichsmechanismus (2) für einen Ausgleichsgasdruck in der Lagerkammer (10) mit der Lagerkammer (10) verbunden ist;
ein Gasauslassdurchlass und ein Gasansaugdurchlass, die in einer Richtung offen sind und entgegengesetzte Öffnungsrichtungen aufweisen, in dem Druckausgleichsmechanismus (2) vorgesehen sind;
ein Gaseinlassende des Gasauslassdurchlasses mit einem Inneren der Lagerkammer (10) verbunden ist, und ein Gasauslassende des Gasauslassdurchlasses mit einer Außenseite der Lagerkammer (10) verbunden ist;
ein Gasauslassende des Gasansaugdurchlasses mit dem Inneren der Lagerkammer (10) verbunden ist, und ein Gaseinlassende des Gasansaugdurchlasses mit der Außenseite der Lagerkammer verbunden ist, wobei
der Druckausgleichsmechanismus (2) eine Basis (31) und Rückschlagventile (32) aufweist; wobei
die Basis (31) zum Befestigen des Rückschlagventils (32) dient;
das Rückschlagventil (32) in dem Gasauslassdurchlass derart vorgesehen ist, dass es von dem Inneren der Lagerkammer (10) nach außen geöffnet wird;
das Rückschlagventil (32) in dem Gasansaugdurchlass derart vorgesehen ist, dass es von der Außenseite der Lagerkammer (10) nach innen geöffnet wird; und
wobei das Gaseinlassende des Gasauslassdurchlasses mit einem Inneren der Lagerkammer (10) verbunden ist, und das Gasauslassende des Gasauslassdurchlasses mit einer Außenseite der Lagerkammer (10) verbunden ist und, wenn der Gasdruck in der Lagerkammer zu hoch ist, Gas in der Lagerkammer (10) über den Gasauslassdurchlass nach außen ausgelassen wird, derart, dass der Gasdruck in der Lagerkammer (10) fällt, wobei das Gasauslassende des Gasansaugdurchlasses mit dem Inneren der Lagerkammer (10) verbunden ist, und ein Gaseinlassende des Gasansaugdurchlasses mit der Außenseite der Lagerkammer (10) verbunden ist und, wenn der Gasdruck in der Lagerkammer (10) zu gering ist, externes Gas über den Gasansaugdurchlass in die Lagerkammer (10) eintritt, derart, dass der Gasdruck in der Lagerkammer (10) steigt.

2. Verfahren zum Regeln der Gaskonzentration in einer Gemüsefachschublade nach Anspruch 1, bei welchem das Rückschlagventil (32) in vertikaler Richtung vorgesehen ist und einen Ventilkörper (321) und einen Ventileinsatzwulst (322) aufweist, wobei eine Innenwand des Ventilkörpers (321) sich radial nach innen zusammenzieht, um einen ringförmigen Anschlagbereich (323) zu bilden, und der Ventileinsatzwulst (322) liegt an dem Anschlagbereich (323) an und ist an den Anschlagbereich (323) angepasst, um das Öffnen und Schließen des Rückschlagventils (32) zu ermöglichen.

3. Verfahren zum Regeln der Gaskonzentration in einer Gemüsefachschublade nach Anspruch 1, bei welchem das Lufteinlassende des Gasauslassdurchlasses und das Gasauslassende des Gasansaugdurchlasses mit dem Inneren der Lagerkammer (10) über jeweils einen ersten Port (34) verbunden sind, und das Gasauslassende des Gasauslassdurchlasses und das Gaseinlassende des Gasansaugdurchlasses mit der Außenseite der Lagerkammer (10) über jeweils einen zweiten Port (35) verbunden sind.

4. Verfahren zum Regeln einer Gaskonzentration in einer Gemüsefachschublade (100) mit den folgenden Schritten:
S1: Feststellen, ob eine Lagerkammer (10) zum Lagern von Nahrungsmitteln von einem offenen Zustand zu einem geschlossenen Zustand gewechselt hat;
**gekennzeichnet durch** den Schritt
S2: wenn ja, Zuführen von Frischhaltegas in die Lagerkammer (10) über eine Gaszufuhrzeitt, wobei die Gaszufuhrzeit t = v1(v2^{∗}a), wobei v1 ein Volumen der Lagerkammer angibt, v2 eine Durchflussrate des zugeführten Frischhaltegases angibt, und a die Belüftungseffizienz angibt;
wenn nein, Rückkehr zu S1, wobei
ein Druckausgleichsmechanismus (2) für einen Ausgleichsgasdruck in der Lagerkammer (10) mit der Lagerkammer (10) verbunden ist;
ein Gasauslassdurchlass und ein Gasansaugdurchlass, die in einer Richtung offen sind und entgegengesetzte Öffnungsrichtungen aufweisen, in dem Druckausgleichsmechanismus (2) vorgesehen sind;
ein Gaseinlassende des Gasauslassdurchlasses mit einem Inneren der Lagerkammer (10) verbunden ist, und ein Gasauslassende des Gasauslassdurchlasses mit einer Außenseite der Lagerkammer (10) verbunden ist;
ein Gasauslassende des Gasansaugdurchlasses mit dem Inneren der Lagerkammer (10) verbunden ist, und ein Gaseinlassende des Gasansaugdurchlasses mit der Außenseite der Lagerkammer verbunden ist, wobei
der Druckausgleichsmechanismus (2) eine Basis (31) und Rückschlagventile (32) aufweist; wobei
die Basis (31) zum Befestigen des Rückschlagventils (32) dient;
das Rückschlagventil (32) in dem Gasauslassdurchlass derart vorgesehen ist, dass es von dem Inneren der Lagerkammer (10) nach außen geöffnet wird;
das Rückschlagventil (32) in dem Gasansaugdurchlass derart vorgesehen ist, dass es von der Außenseite der Lagerkammer (10) nach innen geöffnet wird, und wobei das Gaseinlassende des Gasauslassdurchlasses mit einem Inneren der Lagerkammer (10) verbunden ist, und das Gasauslassende des Gasauslassdurchlasses mit einer Außenseite der Lagerkammer (10) verbunden ist und, wenn der Gasdruck in der Lagerkammer zu hoch ist, Gas in der Lagerkammer (10) über den Gasauslassdurchlass nach außen ausgelassen wird, derart, dass der Gasdruck in der Lagerkammer (10) fällt; wobei das Gasauslassende des Gasansaugdurchlasses mit dem Inneren der Lagerkammer (10) verbunden ist, und ein Gaseinlassende des Gasansaugdurchlasses mit der Außenseite der Lagerkammer (10) verbunden ist und, wenn der Gasdruck in der Lagerkammer (10) zu gering ist, externes Gas über den Gasansaugdurchlass in die Lagerkammer (10) eintritt, derart, dass der Gasdruck in der Lagerkammer (10) steigt.

5. Verfahren zum Regeln der Gaskonzentration in einer Gemüsefachschublade nach Anspruch 4, bei welchem das Rückschlagventil (32) in vertikaler Richtung vorgesehen ist und einen Ventilkörper (321) und einen Ventileinsatzwulst (322) aufweist, wobei eine Innenwand des Ventilkörpers (321) sich radial nach innen zusammenzieht, um einen ringförmigen Anschlagbereich (323) zu bilden, und der Ventileinsatzwulst (322) liegt an dem Anschlagbereich (323) an und ist an den Anschlagbereich (323) angepasst, um das Öffnen und Schließen des Rückschlagventils (32) zu ermöglichen.

6. Verfahren zum Regeln der Gaskonzentration in einer Gemüsefachschublade nach Anspruch 4, bei welchem das Lufteinlassende des Gasauslassdurchlasses und das Gasauslassende des Gasansaugdurchlasses mit dem Inneren der Lagerkammer (10) über jeweils einen ersten Port (34) verbunden sind, und das Gasauslassende des Gasauslassdurchlasses und das Gaseinlassende des Gasansaugdurchlasses mit der Außenseite der Lagerkammer (10) über jeweils einen zweiten Port (35) verbunden sind.

## Revendications

1. Procédé de régulation d'une concentration de gaz à l'intérieur d'un bac à légumes (100), comprenant les étapes suivantes :
S1 : juger si une chambre de stockage (10) pour stocker des aliments se trouve dans un état fermé ;
S2 : si oui, acquérir la concentration actuelle de gaz de préservation de fraîcheur à l'intérieur de la chambre de stockage (10) et comparer la concentration actuelle à un seuil prédéfini ;
si non, revenir à S1 ;
**caractérisé par** l'étape
S3 : si la concentration actuelle du gaz de préservation de fraîcheur à l'intérieur de la chambre de stockage (10) est inférieure au seuil prédéfini, charger du gaz de préservation de fraîcheur dans la chambre de stockage (10) ;
si la concentration actuelle du gaz de préservation de fraîcheur à l'intérieur de la chambre de stockage (10) est supérieure ou égale au seuil prédéfini, arrêter le chargement de gaz de préservation de fraîcheur dans la chambre de stockage (10) dans lequel
un mécanisme d'équilibrage de pression (2) pour une pression de gaz d'équilibrage à l'intérieur de la chambre de stockage (10) est raccordé à la chambre de stockage (10) ;
un passage d'évacuation de gaz et un passage d'aspiration de gaz qui sont ouverts de manière unidirectionnelle et ont des directions d'ouverture opposées sont prévus dans le mécanisme d'équilibrage de pression (2) ;
une extrémité d'entrée de gaz du passage d'évacuation de gaz est mise en communication avec un intérieur de la chambre de stockage (10), et une extrémité de sortie de gaz du passage d'évacuation de gaz est mise en communication avec un extérieur de la chambre de stockage (10) ;
une extrémité de sortie de gaz du passage d'aspiration de gaz est mise en communication avec l'intérieur de la chambre de stockage (10), et une extrémité d'entrée de gaz du passage d'aspiration de gaz est mise en communication avec l'extérieur de la chambre de stockage, dans lequel
le mécanisme d'équilibrage de pression (2) comprend une base (31) et des vannes anti-retour (32) ; dans lequel
la base (31) est utilisée pour le montage de la vanne anti-retour (32) ;
la vanne anti-retour (32) dans le passage d'évacuation de gaz est prévue pour être ouverte vers l'extérieur depuis l'intérieur de la chambre de stockage (10) ;
la vanne anti-retour (32) dans le passage d'aspiration de gaz est prévue pour être ouverte vers l'intérieur depuis l'extérieur de la chambre de stockage (10), et
dans lequel l'extrémité d'entrée de gaz du passage d'évacuation de gaz est mise en communication avec un intérieur de la chambre de stockage (10), et l'extrémité de sortie de gaz du passage d'évacuation de gaz est mise en communication avec un extérieur de la chambre de stockage (10), lorsqu'une pression de gaz à l'intérieur de la chambre de stockage est trop élevée, du gaz à l'intérieur de la chambre de stockage (10) est évacué vers l'extérieur via le passage d'évacuation de gaz, de sorte qu'une pression de gaz à l'intérieur de la chambre de stockage (10) chute, l'extrémité de sortie de gaz du passage d'aspiration de gaz est mise en communication avec l'intérieur de la chambre de stockage (10), et une extrémité d'entrée de gaz du passage d'aspiration de gaz est mise en communication avec l'extérieur de la chambre de stockage (10), lorsqu'une pression de gaz à l'intérieur de la chambre de stockage (10) est trop basse, du gaz externe entre dans la chambre de stockage (10) via le passage d'aspiration de gaz, de sorte qu'une pression de gaz à l'intérieur de la chambre de stockage (10) s'élève.

2. Procédé de régulation de la concentration de gaz à l'intérieur du bac à légumes selon la revendication 1, dans lequel
la vanne anti-retour (32) est prévue dans une direction verticale et comprend un corps de vanne (321) et une bille d'obus de vanne (322), dans lequel une paroi interne du corps de vanne (321) se contracte vers l'intérieur radialement pour former une portion d'arrêt (323) annulaire, et la bille d'obus de vanne (322) est disposée sur la portion d'arrêt (323) et est mise en concordance avec la portion d'arrêt (323) pour permettre l'ouverture ou la fermeture de la vanne anti-retour (32).

3. Procédé de régulation de la concentration de gaz à l'intérieur du bac à légumes selon la revendication 1, dans lequel
l'extrémité d'entrée d'air du passage d'évacuation de gaz et l'extrémité de sortie de gaz du passage d'aspiration de gaz sont mises en communication avec l'intérieur de la chambre de stockage (10) respectivement via un premier orifice (34), et l'extrémité de sortie de gaz du passage d'évacuation de gaz et l'extrémité d'entrée de gaz du passage d'aspiration de gaz sont mises en communication avec l'extérieur de la chambre de stockage (10) respectivement via un second orifice (35).

4. Procédé de régulation d'une concentration de gaz à l'intérieur d'un bac à légumes (100), comprenant les étapes suivantes :
S1: juger si une chambre de stockage (10) pour stocker des aliments est permutée d'un état ouvert à un état fermé ;
**caractérisé par** l'étape
S2 : si oui, charger du gaz de préservation de fraîcheur dans la chambre de stockage (10) pendant un temps d'alimentation en gaz t, où le temps d'alimentation en gaz t = v1(v2^{∗}a), dans lequel v1 est un volume de la chambre de stockage, v2 est un débit du gaz de préservation de fraîcheur chargé, et a est l'efficacité de ventilation ;
si non, revenir à S1, dans lequel
un mécanisme d'équilibrage de pression (2) pour équilibrer une pression de gaz à l'intérieur de la chambre de stockage (10) est raccordé à la chambre de stockage (10) ;
un passage d'évacuation de gaz et un passage d'aspiration de gaz qui sont ouverts de manière unidirectionnelle et ont des directions d'ouverture opposées sont prévus dans le mécanisme d'équilibrage de pression (2),
une extrémité d'entrée de gaz du passage d'évacuation de gaz est mise en communication avec un intérieur de la chambre de stockage (10), et une extrémité de sortie de gaz du passage d'évacuation de gaz est mise en communication avec un extérieur de la chambre de stockage (10) ;
une extrémité de sortie de gaz du passage d'aspiration de gaz est mise en communication avec l'intérieur de la chambre de stockage (10), et une extrémité d'entrée de gaz du passage d'aspiration de gaz est mise en communication avec l'extérieur de la chambre de stockage (10), dans lequel
le mécanisme d'équilibrage de pression (2) comprend une base (31) et des vannes anti-retour (32) dans lequel
la base (31) est utilisée pour le montage de la vanne anti-retour (32) ;
la vanne anti-retour (32) dans le passage d'évacuation de gaz est prévue pour être ouverte vers l'extérieur depuis l'intérieur de la chambre de stockage (10) ;
la vanne anti-retour (32) dans le passage d'aspiration de gaz est prévue pour être ouverte vers l'intérieur depuis l'extérieur de la chambre de stockage (10), et dans lequel l'extrémité d'entrée de gaz du passage d'évacuation de gaz est mise en communication avec un intérieur de la chambre de stockage (10), et l'extrémité de sortie du passage d'aspiration de gaz du passage d'évacuation de gaz est mise en communication avec un extérieur de la chambre de stockage (10), lorsqu'une pression de gaz à l'intérieur de la chambre de stockage (10) est trop élevée, du gaz à l'intérieur de la chambre de stockage (10) est évacué vers l'extérieur via le passage d'évacuation de gaz, de sorte qu'une pression de gaz à l'intérieur de la chambre de stockage (10) chute, l'extrémité de sortie de gaz du passage d'aspiration de gaz est mise en communication avec l'intérieur de la chambre de stockage (10), et une extrémité d'entrée de gaz du passage d'aspiration de gaz est mise en communication avec l'extérieur de la chambre de stockage (10), lorsqu'une pression de gaz à l'intérieur de la chambre de stockage (10) est trop basse, du gaz externe entre dans la chambre de stockage (10) via le passage d'aspiration de gaz, de sorte qu'une pression de gaz à l'intérieur de la chambre de stockage (10) s'élève.

5. Procédé de régulation de la concentration de gaz à l'intérieur du bac à légumes selon la revendication 4, dans lequel
la vanne anti-retour (32) est prévue dans une direction verticale et comprend un corps de vanne (321) et une bille d'obus de vanne (322), dans lequel une paroi interne du corps de vanne (321) se contracte vers l'intérieur radialement pour former une portion d'arrêt (323) annulaire, et la bille d'obus de vanne (322) est disposée sur la portion d'arrêt (323) et est mise en concordance avec la portion d'arrêt (323) pour permettre l'ouverture ou la fermeture de la vanne anti-retour (32).

6. Procédé de régulation de la concentration de gaz à l'intérieur du bac à légumes selon la revendication 4, dans lequel
l'extrémité d'entrée d'air du passage d'évacuation de gaz et l'extrémité de sortie de gaz du passage d'aspiration de gaz sont mises en communication avec l'intérieur de la chambre de stockage (10) respectivement via un premier orifice (34), et l'extrémité de sortie de gaz du passage d'évacuation de gaz et l'extrémité d'entrée de gaz du passage d'aspiration de gaz sont mises en communication avec l'extérieur de la chambre de stockage (10) respectivement via un second orifice (35).
